# EUROPEAN PATENT SPECIFICATION

(11) **EP 0 984 439 B1**
(45) Date of publication and mention of the grant of the patent: **15.10.2008**
(21) Application number: 99306184.5
(22) Date of filing: 04.08.1999
(51) Int. Cl.: G11B 7/095

(54) **Optical recording and reproducing apparatus, tilt adjusting method appropriate therefor**
Optisches Aufzeichnungs- und Wiedergabegerät, Verfahren zur Neigungseinstellung dafür
Appareil d'enregistrement et de reproduction optique, procédé de réglage de l'inclinaison approprié

(30) Priority: 05.08.1998 KR 9831871
(43) Date of publication of application: 08.03.2000
(73) Proprietor: SAMSUNG ELECTRONICS CO., LTD., Suwon-City, Kyungki-do (KR)
(72) Inventor: Son, Yong-ki, Suwon-City, Kyungki-do (KR); Seong, Pyong-yong, Seoul (KR); Ryoo, Byung-ryul, Suwon-city, Kyungki-do (KR); Kim, Seok-jung, Suwon-city, Kyungki-do (KR); Seo, Joong-eon, Uiwang-city, Kyungki-do (KR); Hwang, In-wook, Suwon-city, Kyungki-do (KR); Seo, Young-sun, Bundang-gu, Sungnam-city, Kyungki-do (KR)
(74) Representative: Clark, David James

(56) References cited:
- EP-A- 0 443 822
- WO-A-97/26651
- US-A- 5 886 962
- PATENT ABSTRACTS OF JAPAN vol. 1996, no. 06, 28 June 1996 (1996-06-28) -& JP 08 045081 A (MATSUSHITA ELECTRIC IND CO LTD), 16 February 1996 (1996-02-16)
- PATENT ABSTRACTS OF JAPAN vol. 1996, no. 06, 28 June 1996 (1996-06-28) -& JP 08 045095 A (MATSUSHITA ELECTRIC IND CO LTD), 16 February 1996 (1996-02-16)
- PATENT ABSTRACTS OF JAPAN vol. 016, no. 035 (P-1304), 28 January 1992 (1992-01-28) & JP 03 242832 A (VICTOR CO OF JAPAN LTD), 29 October 1991 (1991-10-29)

## Description

The present invention relates to an optical recording and reproducing apparatus and a tilt adjusting method, and more particularly, to an optical recording and reproducing apparatus for adjusting a tilt in accordance with the amount of jitter of a reproducing signal, a tilt adjusting method therefor, and a Recording control method therefor.

An optical pickup of an optical Recording and reproducing apparatus requires an actuator which is an object lens driver. The actuator should precisely move the object lens to a desired position by a magnetic field generated by a permanent magnet.

However, when a disk is curved while the optical Recording and reproducing apparatus records and reads information on or from the disk, or when there is a tilt in an optical pickup during assemble of the optical Recording and reproducing apparatus, the optical signal deteriorates. In order to compensate for the deterioration of the optical signal, the relative tilt amount between the disk and the object lens must be measured to remove the measured tilt amount.

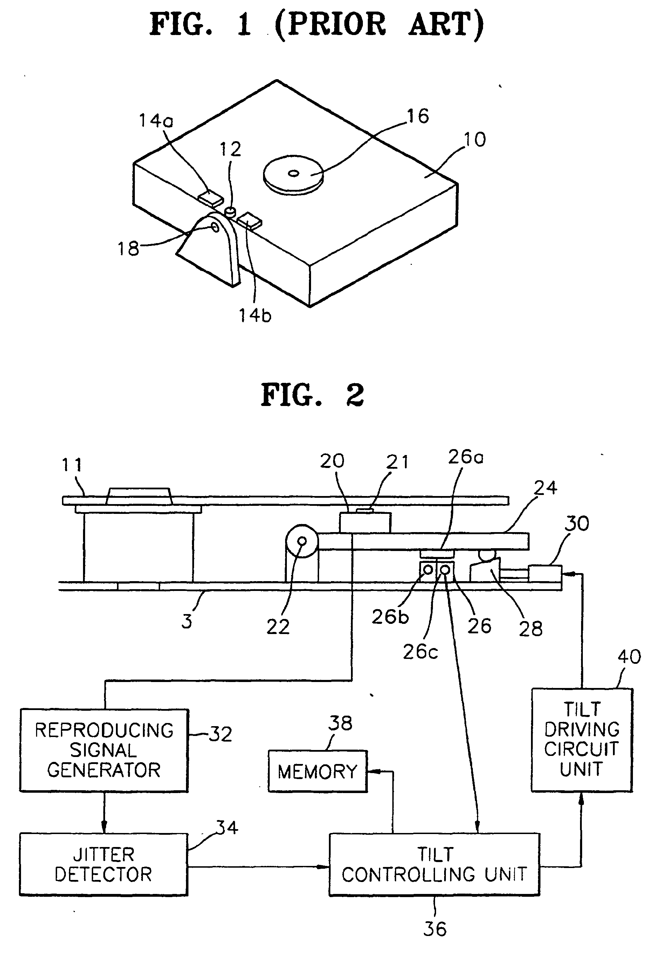

Figure 1 shows the structure of a conventional tilt adjusting apparatus. The apparatus of Figure 1 includes a tilt detector for applying an optical signal to the disk and detecting the tilt amount by the optical signal reflected from the disk and a tilt motor (not shown) which adjusts the tilt of the optical pickup in accordance with the detected tilt amount.

The tilt detector includes a light emitting device 12 fixed on the optical pickup 10 and light receiving devices 14a and 14b to detect the tilt amount between the optical axis and the disk. The signal detected from the light receiving device becomes an input signal for driving a tilt motor through a differential amplifier (not shown).

The tilt motor drives the optical pickup to remove the tilt amount and thus to suppress deterioration of the optical signal. The optical pickup 10 pivots around a fixing and supporting axis 18. The tilt motor moves one side of the optical pickup 10 upward or downward around the fixing and supporting axis 18.

However, in the conventional tilt adjusting apparatus of Figure 1, the tilt detector is arranged on the upper surface of the optical pickup to apply an optical signal to the disk or the size is relatively large, which defines a space.

The tilt detector cannot be arranged in the same position as the objective lens, so that the tilt amount of a current reproduction position cannot be precisely detected.

An additional adjusting apparatus is required to obtain an initial position when the tilt detector is installed on the upper surface of the optical pickup. Also, the amount of light is changed according to the reflection rate of a disk when light beams emitted from the light emitting device are reflected on the disk, so that the precision of tilt measurement and tilt adjustment is deteriorated in a disk having a low reflection rate.

JP 08 045081 describes an apparatus to execute highly reliable reproduction of data by reproducing a provided learning area wherein prearranged data is recorded, and optimizing the radial tilt position, tangential tilt position and focus position of an optical head. In the apparatus a signal is inputted, after digitized by an A/D converter, to a learning means of the radial tilt position and held as the amount of jitter at the present radial tilt position. Subsequently, the jitter amount is measured, while changing the radial tilt position by steps of the certain amount by a means making the radial tilt position variable, then the values are held in the learning means of radial tilt position. This cycle is continued until each optimum radial tilt position on learning tracks of the inner and outer circumferences is discriminated by the learning means, and the optimum radial tilt positions on each area are decided when the all measurements are completed. By this procedure, the reproduction at the optimum radial tilt positions having the small amount of crosstalk from the track is attained for every area.

JP 08293126 against which claims 1 and 4 are delimited, describes a tilt control apparatus to minimize an error in an orthogonal relationship between an optical disk and an optical axis of a light beam irradiated onto the optical disk. The tilt control apparatus includes: an optical pickup for irradiating the light beam onto the optical disk, thereby reproducing information recorded on the optical disk; an orthogonality error detector for outputting an orthogonality error signal corresponding to the error in the orthogonal relationship between the optical disk and the optical axis; a tilting mechanism for tilting the optical axis; a tilt controller for controlling such that the optical disk falls at right angles with the optical axis by driving the tilting mechanism in response to the orthogonality error signal; a pulse width variation detector for outputting a pulse width variation signal corresponding to a variation in a pulse width of an information reproduced signal obtained from the optical pickup; and a target value variable circuit for varying a control target value of the tilt controller based on the pulse width variation signal.

It is an aim of embodiments of the present invention to provide an apparatus for compensating for deterioration of an optical signal due to a tilt between a disk and an object lens.

It is another aim of embodiments of the present invention to provide a method for adjusting the tilt between the disk and the object lens using the above apparatus.

There is provided an optical reproducing apparatus comprising: an optical pickup; tilt adjusting means for adjusting the tilt angle of the optical pickup; jitter detecting means for detecting the amount of jitter of a reproducing signal generated by the optical pickup; and a tilt controlling unit for minimizing the amount of jitter by feeding the amount of jitter detected by the jitter detecting means back to the tilt adjusting means.

Here, preferably, the optical Recording and reproducing apparatus further comprises a memory for storing the optimum tilt adjustment values obtained from the tilt controlling unit.

According to the invention the displacement sensor comprises a light emitting device for generating an optical signal; a reflector for reflecting an optical signal generated from the light emitting device; and a light receiving device for receiving an optical signal reflected from the reflector, and generating an electrical signal corresponding thereto.

Preferably, the reflector is installed on the optical pickup support unit.

According to a second aspect of the invention, there is provided, a tilt adjusting method according to claim 4.

The method preferably further comprises the steps of: (f) driving the tilt driving unit by a maximum driving unit displacement Hmax and a minimum driving unit displacement Hmin when power is applied, and measuring the output Smin and Smax of the displacement sensor corresponding thereto and then obtaining a mean displacement value Savr; and (g) driving the tilt driving unit such that the displacement sensor indicates the mean displacement value Savr.

Each of steps (a) and (b) preferably comprises the substeps of: driving the tilt driving unit to the direction increasing or reducing the tilt of the optimal pickup; checking whether the amount of jitter detected by the jitter detecting means is increased or reduced; driving the tilt driving unit to the direction of reducing the amount of jitter when the detected amount of jitter is increased; and detecting a point in which the amount of jitter is changed to be increased.

For a better understanding of the invention, and to show how embodiments of the same may be carried into effect, reference will now be made, by way of example, to the accompanying diagrammatic drawings in which:
Figure 1 shows the structure of an optical Recording and reproducing apparatus having a conventional tilt adjusting apparatus;
Figure 2 shows the structure of an optical Recording and reproducing apparatus having a tilt adjusting apparatus according to an embodiment of the present invention;
Figure 3 is a circuit diagram showing the detailed structure of a displacement sensor of Figure 2;
Figure 4 is a graph showing characteristics of the displacement sensor of Figure 2;
Figure 5 is a flowchart showing a preferred embodiment of a tilt adjusting method according to the present invention;
Figure 6 is a graph showing the relationship between the amount of jitter and the tilt amount in the apparatus of Figure 2; and
Figure 7 is a flowchart showing a preferred embodiment of a record adjusting method according to the present invention.

Figure 2 shows the structure of a preferred embodiment of an optical Recording and reproducing apparatus according to the present invention.

The apparatus of Figure 2 includes an optical pickup 20, an optical pickup support unit 24, a displacement sensor 26, a reproducing signal generator 32, a jitter detector 34, a tilt controlling unit 36, and a memory 38. The optical pickup 20 records information on a disk 11 or reproduces the information recorded on the disk 11 and includes an object lens 21. The optical pickup support unit 24 on which the optical pickup 20 is positioned pivots around a fixing support 22. The displacement sensor 26 includes a reflector 26a fixed on a lower surface of the optical pickup support unit 24, a light emitting device 26b fixed on an upper surface of an optical pickup fixing frame 3 and light receiving device 26c. The reproducing signal generator 32 generates a reproducing signal corresponding to information recorded on the disk from the optical signal received in the optical pickup 20. The jitter detector 34 detects the amount of jitter of the reproducing signal generated by the reproducing signal generator 32. The tilt controlling unit 36 feeds the amount of jitter of the reproducing signal generated by the jitter detector 34 back to a tilt driving circuit unit 40 to control the tilt angle of the optical pickup. The memory 38 stores a reference tilt adjustment value.

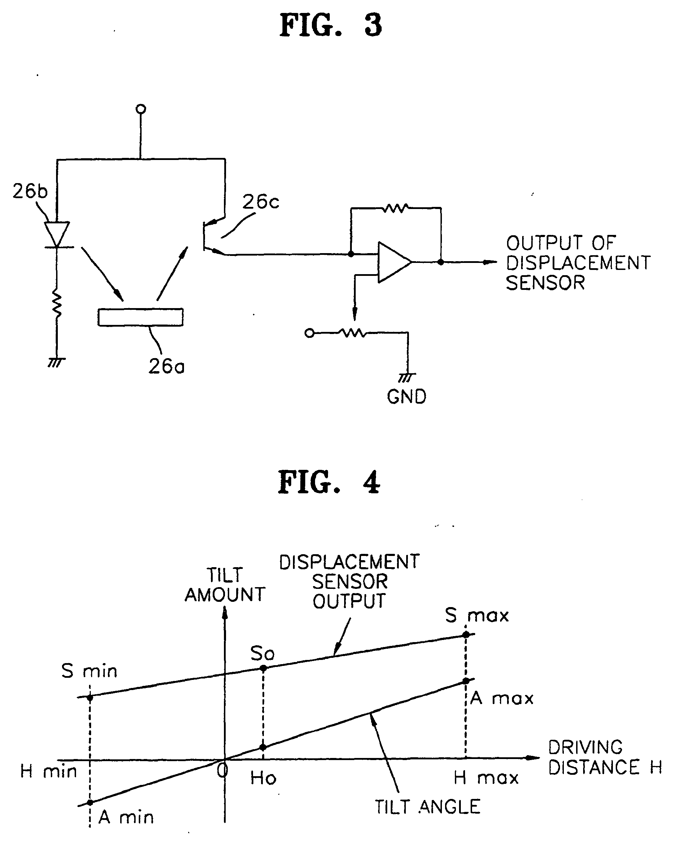

As shown in Figure 3, the displacement sensor 26 measures the amount of light detected by the light receiving device 26c which detects an optical signal reflected from the reflector 26a after emission from the light emitting device 26b to thereby detect the displacement of the optical pickup 20. The reflector 26a is installed at a predetermined angle with respect to the light emitting device 26b, e.g., 180° and separated a predetermined distance.

Since the object lens 21 is the part of the optical pickup 22 moving clockwise or counterclockwise around the fixing and supporting point 22, the object lens 21 tilts to the upper surface of the optical pickup support unit 24 when the optical pickup support unit 24 tilts according to a tilt driving unit 28. The angle of the object lens 21 with respect to the optical pickup support unit 24 is detected by the displacement sensor 26.

In Figure 4, the horizontal axis indicates a driving distance and the vertical axis indicates a tilt amount and a tilt angle. A lower solid line indicates the tilt angle and an upper solid line indicates the output of the displacement sensor.

As shown in Figure 4, the output of the displacement sensor 26 is almost linearly changed in accordance with the tilt angle of the optical pickup 20.

In the apparatus of Figure 2, the jitter is adjusted in accordance with the control of the tilt driving unit 28 such that the amount of jitter detected by the jitter detector 34 is minimized, and the displacement sensor 26 determines the tilt angle of the optical pickup 20 due to the tilt driving unit 28.

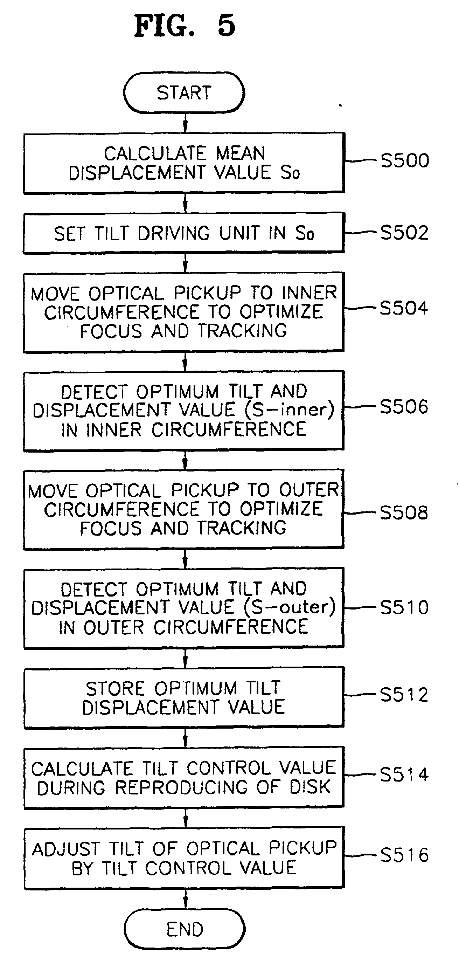

Referring to Figure 5, when a power supply is applied, the tilt driving unit 28 is driven by a maximum driving distance Hₘₐₓ and a minimum driving distance Hₘᵢₙ, and the output Sₘₐₓ and Sₘᵢₙ of the displacement sensor 26 corresponding thereto is measured, and then (Sₘₐₓ - Sₘᵢₙ)/2 is calculated by a mean displacement value S₀ (step 500).

Then, the tilt driving unit 28 is set in S₀ such that the displacement sensor 26 indicates the mean displacement value S₀ (step 502). Here, the driving distance is a mean driving distance H₀. H₀ is a reference point of servo operation and tilt adjustment during mounting of a disk.

When the disk is mounted on the optical pickup apparatus, the optical pickup 20 is moved to an inner portion of the disk, for instance, to a lead-in region about 23mm from the center, and then a focus and a tracking state are optimized such that the jitter of the reproducing signal is minimized (step 504). At this time, the tilt driving unit 30 is driven to detect the output S_inner of the displacement sensor from a point in which the jitter of the reproducing signal is minimized (step 506).

The optical pickup 20 is moved to an outer circumference position of the disk, for instance to a lead-out region about 58mm from the center, and then the focus and the tracking state are optimized such that the jitter of the reproducing signal is minimized (step 508). At this time, the output S_outer of the displacement sensor 26 is detected from a point in which the jitter of the reproducing signal is minimized while the tilt driving unit 30 is driven (step 510).

In the optical recording and reproducing apparatus, as the jitter becomes smaller, the jitter signal is an indicator of the reproducing state of the data recorded on the disk gets better.

When an optical axis of an optical pickup and a disk reflection surface tilt from a vertical axis, the pit state of the disk is not good or the state of the focus and the track servo is instable, a jitter signal is deteriorated. According to the present disclosure, the focus and the tracking servo are optimized. Thus, the optimum tilt adjustment value is obtained from a point in which the jitter is minimum while the tilt is shaken.

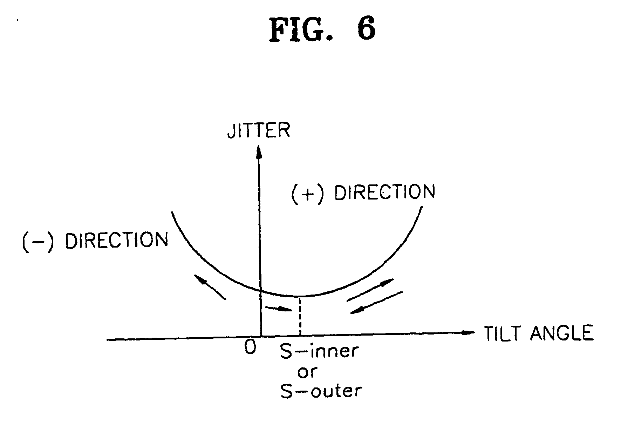

Referring to Figure 6, as shown in Figure 5, the tilt driving unit 28 tilts the optical pickup 20 to the (+) direction of increasing the output of the displacement sensor 28 so that a point where the jitter is minimum can be found, and when the jitter increases, the tilt driving unit 28 tilts the optical pickup 20 in a direction to reduce the jitter. When the jitter is reduced, the tilt driving unit 28 continues tilting the optical pickup 20 in the direction of reducing the jitter, and when the jitter is increased to return to the previous tilt, the point where the jitter is minimum can be found.

When the optimum displacement value S_inner and S_outer in which the jitter is minimized at inner and outer circumferences of the disk is detected, the detected optimum displacement value is stored in the memory 38 (step 512).

The tilt controlling unit 36 calculates a tilt control value from a reproducing position by interpolation with reference to an optimum tilt displacement value of the inner and outer circumferences stored in the memory 38 during reproduction of the disk (step 514).

The calculated tilt adjustment value is applied to the tilt driving unit 28 to adjust the tilt of the optical pickup (step 516). That is, by the method as shown in Figure 5, the displacement in which the jitter is minimum is obtained from inner and outer circumferences of the disk, and the displacement in which the jitter is minimum at an arbitrary point is estimated by interpolation.

The apparatus and the method shown in FIGS. 2 and 5 can be used together with another pit controlling method. In a method for adjusting a tilt in accordance with a pit signal, and when the outer circumference of a DVD-RAM disk has no pit, the tilt cannot be adjusted by the pit signal. At this time, in a drive test zone, the tilt can be adjusted by the disclosed method and apparatus.

The jitter adjusting method according to the present disclosure can be used to ensure an optimal Recording state in a Recording mode. In the Recording mode, the tilt of the drive test zone can be recorded with reference to the output of the displacement sensor, and the tilt amount in which the jitter of the recorded signal is optimum can be detected.

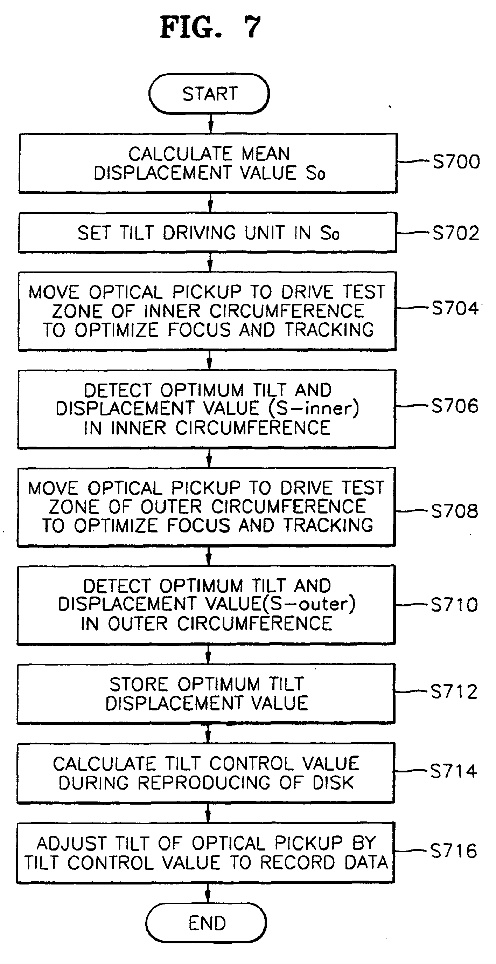

Referring to Figure 7, when power is applied, the tilt driving unit 28 is driven by a maximum driving distance Hₘₐₓ and a minimum driving distance Hₘᵢₙ and the output Sₘᵢₙ and Sₘₐₓ of the displacement sensor 26 corresponding thereto is measured, and then (Sₘₐₓ - Sₘᵢₙ)/2 is calculated by a mean displacement value S₀ (step 700).

Then, the tilt driving unit 28 is set in So such that the displacement sensor 26 indicates the mean displacement value S₀ (step 702). At this time, a driving distance is a mean driving distance H₀. H₀ is a reference point of the servo operation of the disk and the tilt adjustment during mounting of the disk.

The optical pickup 20 is moved to a drive test zone of the inner circumference of the disk before recording, and then the focus and the tracking state are optimized such that the jitter of the recording signal is minimized (step 704).

The tilt driving unit 30 is driven to detect the output S_inner of the displacement sensor from a point at which the jitter of the recording signal is minimum (step 706).

A method for detecting a point at which the jitter of the recording signal is minimum is as follows.

A test signal is recorded on a drive test zone.

The recorded test signal is reproduced, and the amount of jitter of the reproducing signal is detected.

The optical pickup 20 tilts in the direction of increasing the output of the displacement sensor 28 and the test signal is recorded, and then the amount of jitter of the reproducing signal is detected. The detected amount of jitter is compared with the previous amount of jitter. When the jitter is increased, the optical pickup tilts in the direction of reducing the jitter. When the jitter is reduced, the optical pickup continues tilting to the direction of reducing the jitter, and when the jitter is again increased to return to a previous tilt, the point at which the jitter is minimum can be found.

The optical pickup 20 is moved to a drive test zone located in an outer circumference, and a focus and the tracking state are optimized such that the jitter of the recording signal is minimum (step 708).

The tilt driving unit 30 is driven to detect the output S_outrec of the displacement sensor from a point in which the jitter of the recording signal is minimum (step 710).

Then, an optimum displacement value S_inrec and S_outrec in which the jitter of the inner and outer circumferences of the disk is minimum is stored in the memory 38 (step 712).

The tilt adjustment value is calculated in the recording position by interpolation with reference to the output S_inrec and S_outrec stored in the memory 38 during recording of the disk (step 714).

The calculated tilt adjustment value is applied to the tilt driving unit 30 to adjust and record the tilt of the optical pickup (step 716).

By the above-described method, tilt caused by a curvature of the disk or assembly error in a disk whole interval is adjusted, which enables optimal Recording and reproducing.

As described above, according to the optical recording and reproducing apparatus of embodiments of the present invention, there is no need for a space in which a displacement sensor detecting the tilt angle of the optical pickup faces the disk. Also, there is no need for an additional adjusting apparatus for adjusting the displacement sensor. Furthermore, also, the tilt with respect to the whole interval of the disk can be detected.

According to the optical Recording and reproducing apparatus of embodiments of the present invention, displacement is detected using one light emitting device and one light receiving device so that production costs are reduced, and the size of the displacement sensor can be reduced, with the tilt angle being detectable regardless of the reflection rate of the disk so that the accuracy of the measurement and adjustment can be increased.

## Claims

1. An optical recording and reproducing apparatus comprising:
an optical pickup (20);
tilt adjusting means (28, 30, 40) for adjusting the tilt angle of the optical pickup (20);
jitter detecting means (34) for detecting the amount of jitter of a reproducing signal generated by the optical pickup (20); and
a tilt controlling unit (36) for minimizing the amount of jitter by feeding the amount of jitter detected by the jitter detecting means back to the tilt adjusting means; **characterised by** further comprising: a displacement sensor (26) comprising a light emitting device (26b) for generating an optical signal; a reflector (26a) for reflecting an optical signal generated from the light emitting device (26b); and a light receiving device (26c) for receiving an optical signal reflected from the reflector (26a), and generating an electrical signal corresponding thereto, to thereby detect the tilt angle of the optical pickup (20) with respect to a predetermined reference surface,
and wherein the tilt controlling unit (36) obtains optimum tilt adjustment values from two points spacing in the radial direction of the disk (11), and the tilt angle is adjusted by interpolation of the obtained optimum tilt adjustment values.

2. The optical recording and reproducing apparatus of claim 1, further comprising a memory (38) for storing the optimum tilt adjustment values obtained from the tilt controlling unit (36).

3. The optical recording and reproducing apparatus of claim 1 or 2, wherein the reflector (26a) is installed on an optical pickup support unit (24).

4. A tilt adjusting method of an optical recording and reproducing apparatus having an optical pickup (20) including an object lens (21), tilt adjusting means for adjusting the tilt angle of the object lens, displacement sensor (26) for detecting the tilt degree of the optical pickup (20) with respect to a predetermined reference surface, jitter detecting means (34) for detecting the amount of jitter of a reproducing signal generated by the optical pickup (20), and a tilt controlling unit (36) for minimizing the amount of jitter by feeding the amount of jitter detected by the jitter detecting means (34) back to the tilt adjusting means, the method comprising the steps of:
(a) moving the optical pickup (20) to an inner circumference of a disk (11) when the disk (11) is mounted on the optical pickup apparatus, operating a focus and a tracking servo to adjust an offset of the focus and the track servo such that the jitter of a reproducing signal is minimized, and driving a tilt driving unit (28) of the tilt adjusting means (28, 30, 40) to detect the output S_inner of a displacement sensor (26) at a point at which the jitter of the reproducing signal is minimized;
(b) moving the optical pickup (20) to an outer circumference of the disk (11), operating the focus and the tracking servo to adjust the offset of the focus and the track servo such that the jitter of the reproducing signal is minimized, and driving the tilt driving unit (28) to detect the output S_outer of the displacement sensor (26) at the point in which the jitter of the reproducing signal is minimum;
(c) storing the displacement amount S_inner and S_outer in which the jitter at the inner and outer circumferences of the disk are minimum;
(d) calculating a tilt controlling value of a reproducing position by interpolation with reference to the stored output S_inner and S_outer during reproduction of the disk (11); and
(e) applying the calculated tilt controlling value to the tilt driving unit to adjust the tilt of the optical pickup (20); **characterized in that** the displacement sensor (26) comprises a light emitting device (26b), a reflector (26a) and a light receiving device (26c), and wherein the output of the displacement sensor (26) is an electrical signal generated in response to an optical signal received at the light receiving device (26c) reflected from the reflector (26a), and having been generated by the light emitting device (26b).

5. The method of claim 4, further comprising the steps of initializing the tilt driving unit (28), said steps comprising:
(f) driving the tilt driving unit (28) by a maximum driving unit displacement Hmax and a minimum driving unit displacement Hmin when power is applied, and measuring the output Smin and Smax of the displacement sensor corresponding thereto and then obtaining a mean displacement value Savr; and
(g) driving the tilt driving unit (28) such that the displacement sensor (26) indicates the mean displacement value Savr.

6. The tilt adjusting method of claim 4 or 5, wherein each of steps (a) and (b) comprises the substeps of:
driving the tilt driving unit (28) to the direction increasing or reducing the tilt of the optical pickup (20);
checking whether the amount of jitter detected by the jitter detecting means (34) is increased or reduced;
driving the tilt driving unit (28) to the direction of reducing the amount of jitter when the detected amount of jitter is increased; and
detecting a point in which the amount of jitter is changed to be increased.

## Patentansprüche

1. Optische Aufzeichnungs- und Wiedergabevorrichtung, umfassend:
einen optischen Aufnehmer (20);
eine Neigungseinstelleinrichtung (28, 30, 40) zum Einstellen des Neigungswinkels des optischen Aufnehmers (20);
eine Jitter-Detektiereinrichtung (34) zum Detektieren des Ausmaßes an Jitter eines durch den optischen Aufnehmer (20) erzeugten Wiedergabesignals und
eine Neigungsregeleinrichtung (36) zum Minimieren des Ausmaßes an Jitter durch Rückführen des durch die Jitter-Detektiereinrichtung erkannten Ausmaßes an Jitter zu der Neigungswinkel-Einstelleinrichtung
und **dadurch gekennzeichnet, dass** sie des Weiteren umfasst: einen Versatzsensor (26), umfassend eine Licht emittierende Einrichtung (26b) zum Erzeugen eines optischen Signals, einen Reflektor (26a) zum Reflektieren eines von der Licht emittierenden Einrichtung (26b) erzeugten optischen Signals und eine Licht empfangende Einrichtung (26c) zum Empfangen eines von dem Reflektor (26a) reflektierten optischen Signals und zum Erzeugen eines dementsprechenden elektrischen Signals, um **dadurch** den Neigungswinkel des optischen Aufnehmers (20) in Bezug auf eine vorgegebene Bezugsfläche zu detektieren,
wobei die Neigungsregeleinrichtung (36) optimale Neigungseinstellwerte von zwei Punkten, die in der radialen Richtung der Platte (11) beabstandet sind, bezieht und der Neigungswinkel durch Interpolieren der bezogenen optimalen Neigungseinstellwerte eingestellt wird.

2. Optische Aufzeichnungs- und Wiedergabevorrichtung nach Anspruch 1, die des Weiteren einen Speicher (38) zum Speichern der von der Neigungsregeleinrichtung (36) bezogenen optimalen Neigungseinstellwerte umfasst.

3. Optische Aufzeichnungs- und Wiedergabevorrichtung nach Anspruch 1 oder 2, wobei der Reflektor (26a) auf einer Trageinheit (24) des optischen Aufnehmers installiert ist.

4. Neigungseinstellverfahren einer optischen Aufzeichnungs- und Wiedergabevorrichtung mit einem optischen Aufnehmer (20), umfassend eine Objektlinse (21), eine Neigungseinstelleinrichtung zum Einstellen des Neigungswinkels der Objektlinse, einen Versatzsensor (26) zum Detektieren des Neigungsgrades des optischen Aufnehmers (20) in Bezug auf eine vorgegebene Bezugsfläche, eine Jitter-Detektiereinrichtung (34) zum Detektieren des Ausmaßes an Jitter eines durch den optischen Aufnehmer (20) erzeugten Wiedergabesignals und
eine Neigungsregeleinrichtung (36) zum Minimieren des Ausmaßes an Jitter durch Rückführen des durch die Jitter-Detektiereinrichtung (34) erkannten Ausmaßes an Jitter zu der Neigungseinstelleinrichtung, wobei das Verfahren die folgenden Schritte umfasst:
(a) Bewegen des optischen Aufnehmers (20) zu einem Innenumfang einer Platte (11), wenn die Platte (11) auf der optischen Aufnehmervorrichtung angebracht ist, Betreiben eines Fokusservos und eines Spurservos, um einen Offset des Fokusservos und des Spurservos so einzustellen, dass der Jitter eines Wiedergabesignals minimiert wird, und Ansteuern einer Neigungsantriebseinheit (28) der Neigungsregeleinrichtung (28, 30, 40), um die Ausgabe S_inner eines Versatzsensors (26) an einem Punkt, an dem der Jitter des Wiedergabesignals minimiert ist, zu detektieren,
(b) Bewegen des optischen Aufnehmers (20) zu einem Außenumfang der Platte (11), Betreiben des Fokusservos und des Spurservos, um den Offset des Fokusservos und des Spurservos so einzustellen, dass der Jitter des Wiedergabesignals minimiert wird, und Ansteuern der Neigungsantriebseinheit (28), um die Ausgabe S_outer des Versatzsensors (26) an dem Punkt, an dem der Jitter des Wiedergabesignals auf dem Mindestmaß ist, zu detektieren,
(c) Speichern der Versatzmenge S_inner und S_outer, in der der Jitter an dem Innen- und Außenumfang der Platte auf dem Mindestwert ist,
(d) Berechnen eines Neigungsregelwertes einer Wiedergabeposition durch Interpolieren unter Bezugnahme auf die gespeicherten Ausgaben S_inner und S_outer, während der Wiedergabe der Platte (11), und
(e) Anwenden des berechneten Neigungsregelwertes auf die Neigungsantriebseinheit, um die Neigung des optischen Aufnehmers (20) einzustellen,
und **dadurch gekennzeichnet, dass** der Versatzsensor (26) eine Licht emittierende Einrichtung (26b), einen Reflektor (26a) und eine Licht empfangende Einrichtung (26c) umfasst, wobei die Ausgabe des Versatzsensors (26) ein elektrisches Signal ist, das in Reaktion auf ein optisches Signal erzeugt wird, das reflektiert von dem Reflektor (26a) in der Licht empfangenden Einrichtung (26c) empfangen wird und durch die Licht emittierende Einrichtung (26b) erzeugt worden ist.

5. Verfahren nach Anspruch 4, das des Weiteren die Schritte des Initialisierens der Neigungsantriebseinheit (28) umfasst, wobei diese Schritte umfassen:
(f) Ansteuern der Neigungsantriebseinheit (28) mittels eines maximalen Antriebseinheitsversatzes Hmax und eines minimalen Antriebseinheitsversatzes Hmin, wenn Antriebsleistung angewendet wird, und Messen der dementsprechenden Ausgaben Smin und Smax des Versatzsensors und anschließendes Beziehen eines mittleren Versatzwertes Savrund
(g) Ansteuern der Neigungsantriebseinheit (28) so, dass der Versatzsensor (26) den mittleren Versatzwert Savr anzeigt.

6. Neigungseinstellverfahren nach Anspruch 4 oder 5, wobei jeder der Schritte (a) und (b) die folgenden Unterschritte umfasst:
Ansteuern der Neigungsantriebseinheit (28) in die Richtung, die die Neigung des optischen Aufnehmers (20) vergrößert oder verkleinert,
Prüfen, ob das durch die Jitter-Detektiereinrichtung (34) detektierte Ausmaß an Jitter zunimmt oder verringert wird,
Ansteuern der Neigungsantriebseinheit (28) in die Richtung der Verringerung des Ausmaßes an Jitter, wenn das erkannte Ausmaß an Jitter zunimmt, und
Detektieren eines Punktes, an dem das Ausmaß an Jitter verändert wird, um größer zu sein.

## Revendications

1. Dispositif de reproduction et d'enregistrement optique, comportant :
Une tête de lecture optique (20) ;
un moyen de réglage d'inclinaison (28, 30, 40) pour régler l'angle d'inclinaison de la tête de lecture optique (20) ;
un moyen de détection de scintillement (34) pour détecter la quantité de scintillement d'un signal de reproduction généré par la tête de lecture optique (20) ; et
une unité de commande d'inclinaison (36) pour minimiser la quantité de scintillement en réintroduisant la quantité de scintillement détectée par le moyen de détection de scintillement dans le moyen de réglage d'inclinaison ; **caractérisée en ce qu'**elle comporte en outre : un capteur de déplacement (26) comportant un dispositif émetteur de lumière (26b) pour générer un signal optique ; un réflecteur (26a) pour réfléchir un signal optique généré à partir du dispositif émetteur de lumière (26b) ; et un dispositif récepteur de lumière (26c) pour recevoir un signal optique réfléchir à partir du réflecteur (26a), et générer un signal électrique correspondant, pour détecter ainsi l'angle d'inclinaison de la tête de lecture optique (20) par rapport à une surface de référence prédéterminée,
et dans lequel, l'unité de commande d'inclinaison (36) obtient des valeurs de réglage d'inclinaison optimales à partir de deux points espacés dans le sens radial du disque (11), et l'angle d'inclinaison est réglé par interpolation des valeurs de réglage d'inclinaison obtenues.

2. Dispositif de reproduction et d'enregistrement optique selon la revendication 1, comportant en outre une mémoire (38) pour stocker les valeurs de réglage d'inclinaison obtenues à partir de l'unité de commande d'inclinaison (36).

3. Dispositif de reproduction et d'enregistrement optique selon la revendication 1 ou 2, dans lequel le réflecteur (26a) est installé sur une unité de support de tête de lecture optique (24).

4. Procédé de réglage d'inclinaison d'un dispositif de reproduction et d'enregistrement optique comportant une tête de lecture optique (20) incluant un objectif (21), un moyen de réglage d'inclinaison pour régler l'angle d'inclinaison de l'objectif, un capteur de déplacement (26) pour détecter le degré d'inclinaison de la tête de lecture optique (20) par rapport à une surface de référence prédéterminée, un moyen de détection de scintillement (34) pour détecter la quantité de scintillement d'un signal de reproduction généré par la tête de lecture optique (20) ; et une unité de commande d'inclinaison (36) pour minimiser la quantité de scintillement en réintroduisant la quantité de scintillement détectée par le moyen de détection de scintillement (34) dans le moyen de réglage d'inclinaison ; le procédé comportant les étapes consistant à :
(a) déplacer la tête de lecture optique (20) vers une circonférence interne d'un disque (11) lorsque le disque (11) est monté sur le dispositif de tête de lecture optique, actionner un servomécanisme de mise au point de poursuite pour régler un décalage de la mise au point et le servomécanisme de poursuite de sorte que le scintillement d'un signal de reproduction soit minimisé, et entraîner une unité d'entraînement d'inclinaison (28) du moyen de réglage d'inclinaison (28, 30, 40) pour détecter la sortie S_inner (« S_interne ») d'un capteur de déplacement (26) à un point auquel le scintillement du signal de reproduction est minimisé ;
(b) déplacer le capteur optique (20) vers une circonférence externe du disque (11), actionner le servomécanisme de mise au point et de poursuite pour régler le décalage de la mise au point et le servomécanisme de poursuite de sorte que le scintillement du signal de reproduction soit minimisé, et entraîner l'unité d'entraînement d'inclinaison (28) pour détecter la sortie S_outer (« S_externe ») du capteur de déplacement (26) au point auquel le scintillement du signal de reproduction est minimum ;
(c) stocker les quantités de déplacement S_inner et S_outer pour lesquelles le scintillement au niveau des circonférences externe et interne du disque est minimum ;
(d) calculer une valeur de commande d'inclinaison d'une position de reproduction par interpolation en référence aux sorties S_inner et S_outer stockées au cours de la reproduction du disque (11) ; et
(e) appliquer la valeur de commande d'inclinaison calculée à l'unité d'entraînement d'inclinaison pour régler l'inclinaison de la tête de lecture optique (20) ; **caractérisé en ce** le capteur de déplacement (26) comporte un dispositif émetteur de lumière (26b), un réflecteur (26a) et un dispositif récepteur de lumière (26c), et dans lequel la sortie du capteur de déplacement est un signal électrique généré en réponse à un signal optique par le dispositif récepteur de lumière (26c) réfléchi à partir du réflecteur (26a) et ayant été généré par le dispositif émetteur de lumière (26b).

5. Procédé selon la revendication 5, comportant en outre les étapes consistant à initialiser l'unité d'entraînement d'inclinaison (28), lesdites étapes consistant à :
(f) entraîner l'unité d'entraînement d'inclinaison (28) par un déplacement d'unité d'entraînement maximal Hmax et un déplacement d'unité d'entraînement minimal Hmin lorsqu'une alimentation électrique est appliquée, et mesurer les sorties Smin et Smax du capteur de déplacement correspondant et ensuite obtenir une valeur de déplacement moyenne Savr ; et
(g) entraîner l'unité d'entraînement d'inclinaison (28) de telle sorte que le capteur de déplacement (26) indique la valeur de déplacement moyenne Savr.

6. Procédé de réglage d'inclinaison selon la revendication 4 ou 5, dans lequel chacune des étapes (a) et (b) comporte les sous-étapes consistant à :
entraîner l'unité d'entraînement d'inclinaison (28) dans le sens augmentant ou réduisant l'inclinaison de la tête de lecture optique (20) ;
vérifier si la quantité de scintillement détectée par le moyen de détection de scintillement (34) est augmentée ou réduite ;
entraîner l'unité d'entraînement d'inclinaison (28) dans le sens réduisant la quantité de scintillement détectée lorsque la quantité de scintillement détectée est augmentée ; et
détecter un point auquel la quantité de scintillement est modifiée afin d'être augmentée.
